# FASCICULE DE BREVET EUROPEEN

(11) **EP 3 644 007 B1**
(45) Date de publication et mention de la délivrance du brevet: **21.04.2021**
(21) Numéro de dépôt: 19201910.7
(22) Date de dépôt: 08.10.2019
(51) Int. Cl.: F28F 9/02, F28D 9/00

(54) **PROCÉDÉ POUR LA FABRICATION D'UNE SÉRIE D'AU MOINS UN PREMIER ET UN DEUXIÈME ÉCHANGEURS DE CHALEUR**
VERFAHREN ZUR HERSTELLUNG EINER SERIE VON MINDESTENS EINEM ERSTEN UND EINEM ZWEITEN WÄRMETAUSCHER
METHOD FOR MANUFACTURING A SERIES OF AT LEAST ONE FIRST AND ONE SECOND HEAT EXCHANGERS

(30) Priorité: 24.10.2018 FR 1859811
(43) Date de publication de la demande: 29.04.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: CHANTANT, Nicolas, 38360 SASSENAGE (FR); HAIK, Natacha, 94503 CHAMPIGNY SUR MARNE (FR); MACHON DIEZ DE BALDEON, Daniel, 38360 SASSENAGE (FR)
(74) Mandataire: Air Liquide

(56) Documents cités:
- EP-A1- 2 708 840
- EP-A1- 2 950 030
- EP-A2- 0 448 991
- EP-A2- 0 529 329
- FR-A1- 2 844 040

## Description

L'invention concerne un procédé pour la fabrication d'une série d'au moins un premier et un deuxième échangeur de chaleur. Elle concerne également un échangeur de chaleur et une unité de séparation d'air comportant un échangeur de chaleur.

L'échangeur de chaleur est un échangeur configurable à plaques brasées pour refroidir par exemple au moins un fluide destiné à être distillé dans un appareil de séparation d'air.

Il est connu d'utiliser un échangeur à plaques brasées, généralement en aluminium, pour concevoir un échangeur cryogénique par exemple.

Typiquement, l'échangeur comporte un ou plusieurs matrices d'échange reliées entre elles par des tuyauteries de distribution des fluides (collecteurs). Chaque matrice d'échange est composée d'au moins un empilement de tôles brasées, entre lesquelles sont les passages, ainsi que de boîtes collectant les fluides des différents passages. La matrice brasée comprend un empilement successif de tôles et d'ondes, et une pluralité de passages qui sont délimités par l'empilement des tôles et des ondes pour permettre l'écoulement d'au moins un premier fluide et un deuxième fluide à travers l'échangeur qui échangent leur chaleur avec au moins un troisième fluide.

Les passages débouchent dans les faces du corps par des ouvertures qui sont chapeautées par lesdites boîtes de répartition des fluides.

Les appareils de séparation d'air qui comportent des échangeurs à tôles brasées doivent répondre à des demandes variables des commanditaires.

En effet, les pressions et les débits de l'air et des différents fluides qui traversent les échangeurs varient d'un projet d'appareil de séparation d'air à l'autre.

Ce même problème se rencontre évidemment dans d'autres domaines où de multiples échangeurs sont utilisés.

Un moyen courant permettant de s'adapter à la demande du client est de concevoir et de fabriquer les échangeurs sur mesure.

Cette fabrication sur mesure des échangeurs représente un coût élevé et est sujette à des délais de fabrication élevés et non réductibles car la fabrication sur mesure ne permet pas d'approvisionner en avance certaines matières premières (tôles, ondes, etc...) un procédé pour la fabrication d'une série d'au moins un premier et un deuxième échangeur de chaleur selon le préambule de la revendication lest connu de EP 2 708 840.

Il est également connu de fabriquer des échangeurs comportant des matrices standardisées, comme proposé dans le document WO-A-2009/044065.

On entend par matrice standardisée une matrice qui présente une longueur, une largeur et une hauteur d'empilage de tôles prédéfinie, des types d'ondes dans chaque passage prédéfini et qui comporte un nombre de passages et d'ouvertures prédéfini.

Ainsi, les matrices standardisées d'un même type sont tous identiques et peuvent être fabriqués en série et en amont de la phase de conception d'un échangeur pour un appareil de séparation d'air ou de distillation par exemple.

Le document WO-A-2009/044065 décrit et représente un appareil de séparation d'air comportant une ligne d'échange qui comporte une première assemblée d'échangeurs montés en série et une seconde assemblée d'échangeurs montés en série.

Les échangeurs comportent des matrices standardisées du même type. L'appareil de séparation d'air décrit dans le document WO-A-2009/044065 consiste notamment à jouer sur le nombre de corps montés en série pour s'adapter au cahier des charges.

Cette caractéristique implique de mettre plus de matrices que nécessaires, ce qui augmente le coût de l'appareil, ou de mettre moins de matrices que nécessaire, ce qui implique une dégradation de l'énergie nécessaire au fonctionnement de l'appareil de séparation d'air.

La présente invention vise notamment à résoudre ces inconvénients et se rapporte pour ce faire à un procédé pour la fabrication d'une série d'au moins un premier et un deuxième échangeur de chaleur, chaque échangeur comportant :
- au moins une matrice d'échange qui comprend un empilement successif de tôles séparatrices et d'ondes délimitant une pluralité de passages adaptés pour permettre l'écoulement d'au moins un premier fluide, un deuxième fluide et un troisième fluide à travers la matrice, de sorte que le troisième fluide puisse chauffer ou être chauffé par les premier et deuxième fluides,, chaque plaque ayant une longueur et une largeur, l'empilement ayant un sens d'empilement perpendiculaire à la longueur et à la largeur des tôles,
- la matrice comprenant un nombre prédéterminé d'ouvertures qui sont chacune ménagées dans une face périphérique de la matrice et qui communiquent chacune avec un desdits passages associés,
- au moins une boîte de répartition allongée des fluides qui chapeaute au moins une partie des ouvertures et qui est reliée à un conduit,
- la ou les matrices du premier échangeur étant sensiblement identique(s) à celle(s) du deuxième échangeur,
- le procédé consistant à adapter les échangeurs de la série en installant plusieurs boîtes de répartition de fluide sur la matrice, chacune chapeautant une partie seulement des ouvertures assignées au premier fluide et au deuxième fluide et chacune reliée à un conduit de sorte que le nombre d'ouvertures assignées au premier fluide est différent du nombre d'ouvertures assignées au premier fluide, et de préférence le nombre d'ouvertures assignées au deuxième fluide est différent du nombre d'ouvertures assignées au deuxième fluide, pour les au moins premier et deuxième échangeurs de la série.

Selon d'autres objets facultatifs-
- au moins une boîte secondaire de répartition, qui forme un compartiment recouvert totalement ou partiellement par une boîte principale, chapeaute un nombre délimité d'ouvertures en fonction de sa dimension et est reliée à un conduit pour le passage du fluide associé.
- les ouvertures sont alignées et espacées de façon régulière sur ladite face périphérique de l'échangeur.
- une boîte principale de répartition couvre la totalité des ouvertures.
- une boîte, éventuellement une boîte principale, de répartition couvre une partie seulement, voire la plupart, des ouvertures et au moins une autre boîte de répartition couvre une autre partie, voire le reste, des ouvertures.
- les conduits qui sont reliés auxdits compartiments et/ou au moins un collecteur reliant différents conduits des différents corps d'échange de chaleur d'une unité de séparation entre eux, présentent une position dans l'espace identique quelle que soit la configuration du moyen de cloisonnement des boîtes

Selon un autre objet de l'invention, il est prévu un échangeur de chaleur fabriqué ou série d'échangeurs de chaleur fabriqués tel que décrit ci-dessus.

Selon un autre objet de l'invention, il est prévu :
- un échangeur de chaleur comprenant au moins une matrice d'échange qui comprend un empilement successif de tôles séparatrices et d'ondes délimitant une pluralité de passages adaptés pour permettre l'écoulement d'au moins un premier fluide, un deuxième fluide et un troisième fluide à travers la matrice, de sorte que le troisième fluide puisse chauffer ou être chauffé par les premier et deuxième fluides, chaque plaque ayant une longueur et une largeur, l'empilement ayant un sens d'empilement perpendiculaire à la longueur et à la largeur des tôles,
- la matrice comprenant un nombre prédéterminé d'ouvertures qui sont chacune ménagées dans une face périphérique de la matrice et qui communiquent chacune avec un desdits passages associés,
- au moins une boîte principale allongée de répartition des fluides qui chapeaute au moins une partie des ouvertures, voire toutes les ouvertures, et qui est reliée à un conduit, l'axe de la boîte principale étant parallèle au sens d'empilement et perpendiculaire à la largeur et à la longueur des tôles
- au moins une boîte secondaire de répartition, qui forme un compartiment recouvert totalement ou partiellement par la boîte principale de répartition, qui chapeaute un nombre délimité d'ouvertures en fonction de sa dimension et est reliée à un conduit pour le passage du fluide associé, l'axe de la boîte secondaire étant parallèle au sens d'empilement et perpendiculaire à la largeur et à la longueur des tôles

Selon un autre objet de l'invention, il est prévu une unité de séparation d'air comprenant au moins un échangeur de chaleur ou au moins une série d'échangeurs de chaleur tel que décrit ci-dessus.

L'invention permet de choisir le nombre de passages assignés à chaque fluide après la fabrication de la matrice brasée, en définissant au cas par cas le système de boîtes de répartition. Ceci permet de réaliser des économies d'échelle en produisant des matrices en série.

De plus, la préfabrication des matrices permet de réduire le délai de fabrication de l'échangeur.

Selon un mode de réalisation préféré, le moyen de cloisonnement comporte au moins une première cloison, dans la boîte principale de répartition, dont la position sur la matrice peut varier entre une pluralité de positions ; ce qui permet de choisir le nombre d'ouvertures assignées au premier fluide et au deuxième fluide.

Cette caractéristique permet de facilement assigner un nombre d'ouvertures choisi à chaque fluide.

De préférence, pour permettre de préfabriquer la matrice de l'échangeur en avance et de réaliser des économies d'échelle, la matrice est une matrice standardisée.

Selon une variante de réalisation de l'invention, le moyen de cloisonnement comporte au moins une boîte secondaire de répartition qui forme un compartiment à l'intérieur de la boîte principale, qui chapeaute un nombre délimité d'ouvertures en fonction de sa dimension et qui est reliée à un conduit pour le passage du fluide associé. Cette boîte secondaire peut n'être qu'en partie recouverte par la boîte principale.

Classiquement, les ouvertures sont alignées et réparties de façon régulière sur ladite face périphérique de l'échangeur.

Aussi, la matrice de l'échangeur peut comporter une succession de séquences identiques, chaque séquence étant formée par un empilement successif de tôles séparatrices et d'ondes formant une série de passages.

De plus, la boîte principale (ou l'addition de la boîte principale et des boîtes secondaires) de répartition couvre la totalité des ouvertures du premier et deuxième fluide.

Avantageusement, les conduits qui sont reliés auxdits compartiments, et/ou les collecteurs reliant les différents conduits des différents corps d'échange de l'unité de séparation entre eux, présentent une position dans l'espace identique quelle que soit la configuration du moyen de cloisonnement.

Cette caractéristique permet de conserver les mêmes interfaces entre l'échangeur et le reste de l'installation, ou de l'usine, quelle que soit la configuration choisie des moyens de cloisonnement.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective avec arrachement, qui illustre un échangeur comportant une boîte principale de répartition équipée de cloisons de position variable selon les projets, selon un exemple préféré de réalisation de l'invention ;
- la figure 2 est une vue en perspective avec arrachement, qui illustre l'échangeur de la figure 1 avec ses cloisons de position variable selon les projets dans une autre configuration ;
- la figure 3 est une vue en perspective avec arrachement, qui illustre un échangeur comportant une boîte principale de répartition renfermant une boîte secondaire de répartition, selon une première variante de réalisation de l'invention ;
- la figure 4 est une vue en perspective avec arrachement, qui illustre un échangeur comportant une boîte principale de répartition formée de trois boîtes de répartition accolées, selon une seconde variante de réalisation de l'invention.

Dans la description et les revendications, on adoptera à titre non limitatif la terminologie longitudinal, vertical et transversal en référence au trièdre L, V, T indiqué aux figures. Le sens de l'empilement des tôles L est perpendiculaire à la longueur dans le sens vertical V et la largeur dans le sens transversal T des tôles séparatrices 15. La tôle séparatrice est représentée sous une forme raccourcie et en réalité sa longueur V est bien plus grande que sa largeur dans le sens transversal T.

Pour les différentes variantes de réalisation, les mêmes références pourront être utilisées pour des éléments identiques ou assurant la même fonction, par souci de simplification de la description.

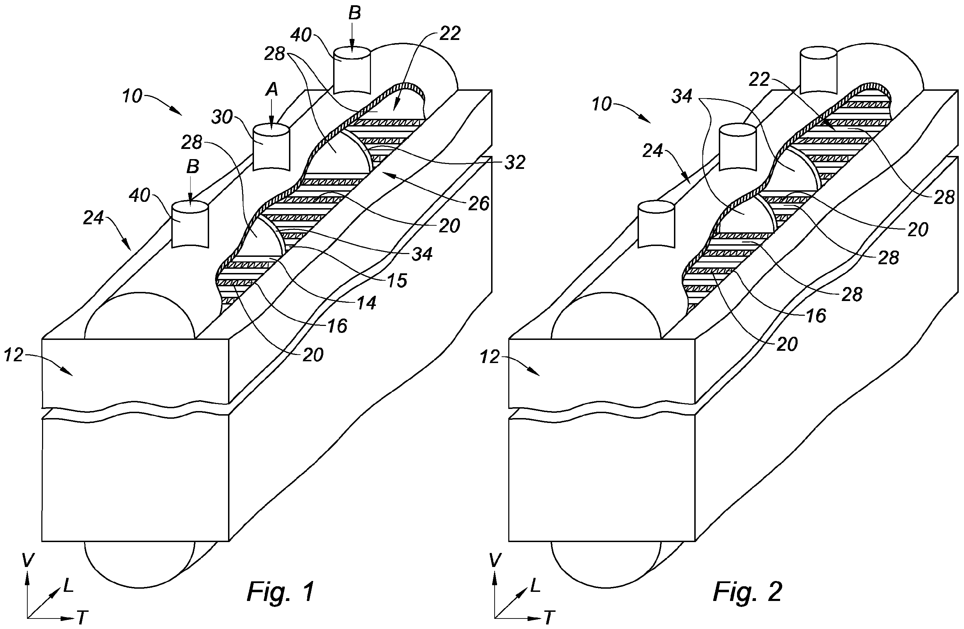

On a représenté à la figure 1 un échangeur 10 de chaleur du type à tôles brasées, qui est destiné notamment à équiper une unité de séparation d'air.

L'échangeur 10 comporte une matrice 12 comprenant un empilement successif de tôles séparatrices 15 et d'ondes 16 suivant un axe longitudinal, qui sont brasées et qui délimitent une pluralité de passages (non représentés). 14 correspond aux passages du troisième ou des autres fluides échangeant avec le premier et le deuxième fluide et ne débouchant donc pas sur une ouverture dans la ou les boîtes de répartition du premier et deuxième fluide. Dans le cas où l'échangeur est associé à un appareil de séparation d'air, le premier fluide peut être de l'azote résiduaire provenant de colonne basse pression d'une double colonne, le deuxième fluide peut être de l'azote pur provenant de la colonne basse pression et le troisième fluide peut être de l'air destiné à la colonne haute pression de la double colonne.

Les passages s'étendent verticalement et ils sont adaptés pour permettre l'écoulement des fluides et le transfert de chaleur à travers l'échangeur 10. Dans les figures la boîte est disposée au-dessus de l'empilement de tôles mais la boîte peut alternativement être disposée sur le bord latéral de l'empilement de tôles en contact avec des ouvertures permettent le transfert de fluides vers les passages. La matrice 12 est ici une matrice standard.

On entend par matrice 12 standard une matrice qui présente une longueur verticale, une largeur transversale et une hauteur longitudinale d'empilage prédéfinie et qui comporte un nombre de passages, de type d'ondes par passages et d'ouvertures prédéfinis.

Ainsi, les matrices d'échangeurs standards d'un même type sont toutes identiques et peuvent être fabriquées en série et en amont de la phase de conception d'un échangeur pour un appareil de séparation d'air par exemple.

Selon l'exemple décrit ici, la matrice 12 effectue un échange de chaleur entre un premier fluide A, un deuxième fluide B, et au moins un troisième fluide.

A cet effet, l'échangeur 10 comporte un nombre prédéterminé d'ouvertures 20 qui sont chacune ménagées dans une face d'entrée 22 du corps d'échange 12 et qui communiquent chacune avec un passage associé.

De plus, l'échangeur 10 comporte une boîte principale 24 allongée de répartition des fluides qui chapeaute les ouvertures 20 ménagées sur la face d'entrée 22 de la matrice 12. Elle est positionnée avec son axe dans le sens de l'empilement L, perpendiculaire à la longueur et à la largeur des tôles.

La boîte principale 24 de répartition comporte un moyen de cloisonnement 34 conçu pour diviser la boîte principale 24 en plusieurs compartiments 28. Ici le moyen 34 est une plaque semi-circulaire disposée parallèlement aux tôles. Sa forme épouse le contour de la boîte 24.

Chaque compartiment 28 est relié à un conduit 30 pour le passage du premier fluide A ou à un conduit 40 pour le passage du deuxième fluide B.

L'invention permet de répartir le nombre d'ouvertures 20 assignées au premier fluide A et au deuxième fluide B de façon variable, après la fabrication de la matrice 12.

Avantageusement, les conduits 30 et 40, et/ou un collecteur qui relie plusieurs conduits venant de différents corps d'échange 10 de la même unité de séparation, présentent une position dans l'espace identique quelle que soit la configuration du moyen de cloisonnement 32,34.

Cette caractéristique permet de conserver les mêmes interfaces entre l'échangeur 10 et le reste de l'installation, ou de l'usine, quelle que soit la configuration choisie des moyens de cloisonnement 32,34.

Selon un exemple de réalisation préféré de l'invention, représenté aux figures 1 et 2, le moyen de cloisonnement comporte une première cloison 32 et une seconde cloison 34 qui sont chacune montées au cas par cas, après le brasage de la matrice, à des positions variables dans la boîte principale 24 de répartition pour compartimenter le volume de la boîte principale 24 en trois compartiments 28. Les cloisons 32,34 sont en forme de semi cercle et épousent la paroi de la boîte 24 afin de rendre les compartiments 28 étanches les uns aux autres.

Les deux compartiments 28 latéraux regroupent les ouvertures 20 qui sont assignées au deuxième fluide B et le compartiment 28 central regroupe les ouvertures 20 qui sont assignées au premier fluide A, par exemple.

La figure 1 illustre un premier exemple de positionnement des cloisons 32,34 dans lequel les trois compartiments 28 sont de dimensions identiques, chaque compartiment 28 regroupant le même nombre d'ouvertures 20.

En variante, la figure 2 illustre un second exemple de positionnement des cloisons 34 dans lequel le compartiment 28 central regroupe moins d'ouvertures 20 que les deux autres compartiments 28.

Ainsi en comparant les figures 1 et 2, on voit que le procédé selon l'invention permet de fabriquer deux échangeurs différents à partir de deux matrices sensiblement identiques en variant uniquement le cloisonnement de la boîte 24, de sorte que le fluide A circule dans le premier échangeur de la série illustré Figure 1 dans plus de passages que dans le deuxième échangeur de la série illustré Figure 2. On constate également que le premier échangeur dédie moins de passages au fluide B que le deuxième.

L'attribution des passages peut également se faire d'autres manières.

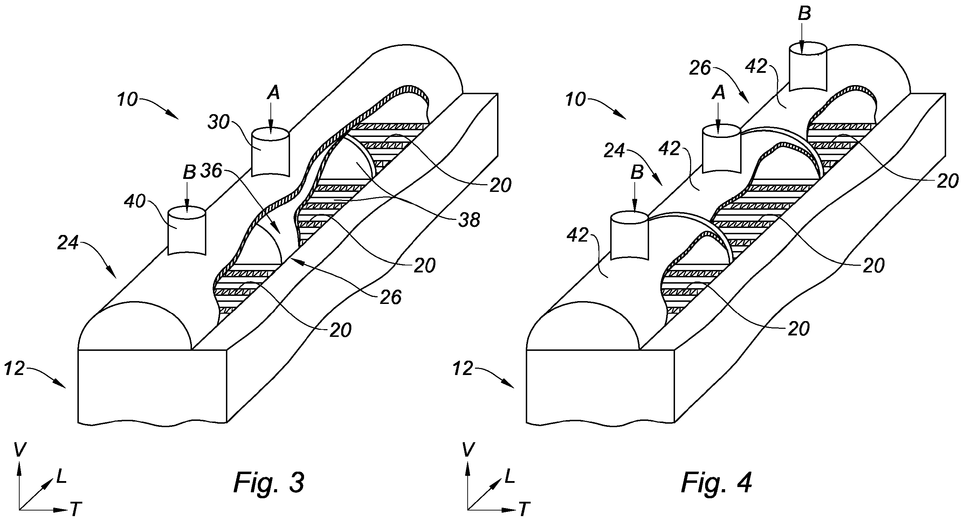

Selon une première variante de réalisation de l'invention représentée à la figure 3, le moyen de cloisonnement 26 comporte une boîte secondaire 36 de répartition qui forme un compartiment 38 à l'intérieur de la boîte principale 24. Ce compartiment 38 peut être recouvert totalement ou partiellement par la boîte principale 24. Chacune des boîtes 24,26 est allongée et a son axe dans le sens de l'empilement, perpendiculaire à la largeur et la longueur des tôles

La boîte secondaire 36 est équipée d'un conduit 30 pour le passage du premier fluide A, le conduit 30 traversant la boîte principale 24.

De même, la boîte principale 24 est équipée d'un seul conduit 40 pour le passage du deuxième fluide B.

La boîte secondaire 36 chapeaute un nombre délimité d'ouvertures 20 en fonction de sa dimension suivant l'axe longitudinal, qui est parallèle au sens de l'empilement des tôles.

Selon une seconde variante de réalisation de l'invention représentée à la figure 4, la boîte principale 24 de répartition est formée de trois boîtes 42 qui sont accolées, ou non de façon à chapeauter les ouvertures 20 de la matrice 12. Chacune des boîtes 42 est allongée et a son axe dans le sens de l'empilement, perpendiculaire à la largeur et la longueur des tôles.

Selon cette variante de réalisation, le moyen de cloisonnement 26 est constitué par l'association des boîtes 42.

La dimension longitudinale des boîtes 42 est adaptée en fonction du nombre d'ouvertures 20 et de passage que l'on souhaite associer au premier fluide A et au deuxième fluide B.

Selon un exemple de réalisation préféré de l'invention, la matrice 12 de l'échangeur 10 est formée par une succession de séquences identiques, chaque séquence étant formées par un empilement successif de tôles séparatrices 15 et d'ondes 14 et 16 formant une série de passages.

Avantageusement, les séquences peuvent être préfabriquées et accolées/brasées les unes à la suite des autres pour former la matrice 12.

De plus, selon un exemple de réalisation de l'invention, les ouvertures 20 sont alignées et réparties sur la face d'entrée 22 de la matrice 12.

L'invention concerne aussi un procédé pour la fabrication d'un échangeur 10 de chaleur du type décrit précédemment.

Le procédé consiste notamment à monter la boîte principale 24 sur la matrice 12 standard et à partitionner la boîte principale 24 en plusieurs compartiments 28 par le moyen de cloisonnement 26 prévu à cet effet, en fonction des spécificités souhaitées pour l'échangeur 10, pour répartir le nombre d'ouvertures 20 assignées au premier fluide A et au deuxième fluide B.

La présente description de l'invention est donnée à titre d'exemple non limitatif.

Pour clarifier la description, seule la boîte principale 24 de répartition des fluides qui chapeaute les ouvertures 20 ménagées sur la face d'entrée 22 de la matrice 12 est décrite.

On comprendra que l'échangeur 10 selon l'invention peut comporter plusieurs autres boîtes pour collecter et/ou répartir le ou les autres fluides ;

Dans les exemples, la boîte 24 est disposée sur la surface supérieure de l'échangeur de chaleur. Elle peut également être disposée sur la surface inférieure ou sur une paroi latérale de l'échangeur.

## Revendications

1. Procédé pour la fabrication d'une série d'au moins un premier et un deuxième échangeur (10) de chaleur, chaque échangeur (10) comportant :
- au moins une matrice d'échange (12) qui comprend un empilement successif de tôles séparatrices (14) et d'ondes (16) délimitant une pluralité de passages (20) adaptés pour permettre l'écoulement d'au moins un premier fluide (A), un deuxième fluide (B) et un troisième fluide à travers la matrice (12), de sorte que le troisième fluide puisse chauffer ou être chauffé par les premier et deuxième fluides, chaque plaque ayant une longueur et une largeur, l'empilement ayant un sens d'empilement (L) perpendiculaire à la longueur et à la largeur des tôles,
- la matrice comprenant un nombre prédéterminé d'ouvertures (20) qui sont chacune ménagées dans une face périphérique (22) de la matrice (12) et qui communiquent chacune avec un desdits passages (20) associés,
- au moins une boîte (24,42) allongée de répartition des fluides qui chapeaute au moins une partie des ouvertures (20) et qui est reliée à un conduit (30,40), l'axe de la boîte étant parallèle au sens d'empilement et perpendiculaire à la largeur (T) et à la longueur (V) des tôles,
- la ou les matrices du premier échangeur étant sensiblement identique(s) à celle(s) du deuxième échangeur,
- le procédé consistant à adapter les échangeurs de la série en installant plusieurs boîtes (42) de répartition allongée de fluide sur la matrice, chacune chapeautant une partie seulement des ouvertures (20) assignées au premier fluide (A) et au deuxième fluide (B), chacune ayant son axe dans le sens de l'empilement, **caractérisé en ce que** chacune des boîtes de répartition est reliée à un conduit (30,40) de sorte que le nombre d'ouvertures assignées au premier fluide est différent du nombre d'ouvertures assignées au premier fluide, et de préférence le nombre d'ouvertures assignées au deuxième fluide est différent du nombre d'ouvertures assignées au deuxième fluide, pour les au moins premier et deuxième échangeurs de la série.

2. Procédé selon la revendication 1, **caractérisé en ce qu'**au moins une boîte secondaire (36) de répartition, qui forme un compartiment (38) recouvert totalement ou partiellement par une boîte principale (24) de répartition, chapeaute un nombre délimité d'ouvertures (20) en fonction de sa dimension et est reliée à un conduit (30) pour le passage du fluide associé.

3. Procédé selon l'une quelconque des revendications précédentes, **caractérisé en ce que** les ouvertures (20) sont alignées et espacées de façon régulière sur ladite face périphérique (22) de l'échangeur (10).

4. Procédé selon l'une quelconque des revendications précédentes, **caractérisé en ce qu'**une boîte principale (24) de répartition couvre la totalité des ouvertures (20).

5. Procédé selon l'une des revendications 1 à 3 **caractérisé en ce qu'**une boîte principale de répartition (42) couvre une partie seulement des ouvertures (20) et au moins une autre boîte de répartition (42) couvre une autre partie, voire le reste, des ouvertures.

6. Procédé selon l'une quelconque des revendications précédentes, **caractérisé en ce que** les conduits (30) qui sont reliés auxdits compartiments (28) et/ou au moins un collecteur reliant différents conduits des différents corps d'échange de chaleur d'une unité de séparation entre eux, présente(nt) une position dans l'espace identique quelle que soit la configuration des boîtes.

7. Série d'échangeurs de chaleur fabriqués selon un procédé selon une des revendications précédentes.

8. Echangeur de chaleur comprenant au moins une matrice d'échange (12) qui comprend un empilement successif de tôles séparatrices (14) et d'ondes (16) délimitant une pluralité de passages (20) adaptés pour permettre l'écoulement d'au moins un premier fluide (A), un deuxième fluide (B) et un troisième fluide à travers la matrice (12), de sorte que le troisième fluide puisse chauffer ou être chauffé par les premier et deuxième fluides, chaque plaque ayant une longueur et une largeur, l'empilement ayant un sens d'empilement (L) perpendiculaire à la longueur et à la largeur des tôles,
- la matrice comprenant un nombre prédéterminé d'ouvertures (20) qui sont chacune ménagée dans une face périphérique (22) de la matrice (12) et qui communiquent chacune avec un desdits passages (20) associés,
- au moins une boîte principale (24,42) allongée de répartition des fluides qui chapeaute au moins une partie des ouvertures (20), voire toutes les ouvertures, et qui est reliée à un conduit (30,40), l'axe de la boîte principale étant parallèle au sens d'empilement (L) et perpendiculaire à la largeur et à la longueur des tôles,
- -au moins une boîte secondaire (36) allongée de répartition, qui forme un compartiment (38) recouvert totalement ou partiellement par la boîte principale (24) de répartition, qui chapeaute un nombre délimité d'ouvertures (20) en fonction de sa dimension et est reliée à un conduit (30) pour le passage du fluide associé, l'axe de la boîte secondaire étant parallèle au sens d'empilement et perpendiculaire à la largeur et à la longueur des tôles.

9. Unité de séparation d'air comprenant au moins un échangeur de chaleur ou au moins une série d'échangeurs de chaleur selon la revendication 7 ou 8.

## Patentansprüche

1. Verfahren zur Herstellung einer Serie von mindestens einem ersten und einem zweiten Wärmetauscher (10), wobei jeder Tauscher (10) Folgendes umfasst:
- mindestens eine Austauschmatrix (12), die einen Stapel von aufeinanderfolgenden Trennblechen (14) und Wellen (16) beinhaltet, die eine Vielzahl von Durchlässen (20) begrenzen, die dazu angepasst sind, das Strömen mindestens eines ersten Fluids (A), eines zweiten Fluids (B) und eines dritten Fluids durch die Matrix (12) zu ermöglichen, sodass das dritte Fluid das erste und das zweite Fluid erwärmen oder durch diese erwärmt werden kann, wobei jede Platte eine Länge und eine Breite aufweist, wobei der Stapel eine zu der Länge und der Breite der Bleche senkrechte Stapelrichtung (L) aufweist,
- wobei die Matrix eine vorgegebene Anzahl von Öffnungen (20) beinhaltet, die jeweils in einer Umfangsfläche (22) der Matrix (12) eingerichtet sind und die jeweils mit einem der assoziierten Durchlässe (20) kommunizieren,
- mindestens einen länglichen Fluidverteilungskasten (24, 42), der mindestens einen Teil der Öffnungen (20) überdeckt und der mit einer Leitung (30, 40) verbunden ist, wobei die Achse des Kastens zu der Stapelrichtung parallel und zu der Breite (T) und der Länge (V) der Bleche senkrecht ist,
- wobei die eine oder die mehreren Matrizen des ersten Tauschers zu der oder denen des zweiten Tauschers im Wesentlichen identisch sind,
- wobei das Verfahren darin besteht, die Tauscher der Serie anzupassen, indem mehrere längliche Fluidverteilungskästen (42) an der Matrix installiert werden, wobei jeder nur einen Teil der Öffnungen (20) überdeckt, die dem ersten Fluid (A) und dem zweiten Fluid (B) zugeteilt sind, wobei die Achse eines jeden in der Stapelrichtung verläuft, **dadurch gekennzeichnet, dass** jeder der Verteilungskästen so mit einer Leitung (30, 40) verbunden ist, dass sich für den mindestens ersten und zweiten Tauscher der Serie die Anzahl von Öffnungen, die dem ersten Fluid zugeteilt sind, von der Anzahl von Öffnungen, die dem ersten Fluid zugeteilt sind, unterscheidet, und dass sich vorzugsweise die Anzahl von Öffnungen, die dem zweiten Fluid zugeteilt sind, von der Anzahl von Öffnungen, die dem zweiten Fluid zugeteilt sind, unterscheidet.

2. Verfahren nach Anspruch 1, **dadurch gekennzeichnet, dass** mindestens ein sekundärer Verteilungskasten (36), der einen Raum (38) bildet, der vollständig oder teilweise durch einen Hauptverteilungskasten (24) abgedeckt ist, in Abhängigkeit von seiner Größe eine begrenzte Anzahl von Öffnungen (20) überdeckt und mit einer Leitung (30) für das Durchlassen des assoziierten Fluids verbunden ist.

3. Verfahren nach einem der vorhergehenden Ansprüche, **dadurch gekennzeichnet, dass** die Öffnungen (20) an der Umfangsfläche (22) des Tauschers (10) regelmäßig ausgerichtet und beabstandet sind.

4. Verfahren nach einem der vorhergehenden Ansprüche, **dadurch gekennzeichnet, dass** ein Hauptverteilungskasten (24) alle Öffnungen (20) abdeckt.

5. Verfahren nach einem der Ansprüche 1 bis 3, **dadurch gekennzeichnet, dass** ein Hauptverteilungskasten (42) nur einen Teil der Öffnungen (20) abdeckt und mindestens ein anderer Verteilungskasten (42) einen anderen Teil, oder aber den Rest, der Öffnungen abdeckt.

6. Verfahren nach einem der vorhergehenden Ansprüche, **dadurch gekennzeichnet, dass** die Leitungen (30), die mit den Räumen (28) verbunden sind, und/oder mindestens ein Sammler, der verschiedene Leitungen der verschiedenen Wärmeaustauscheinbauten einer Trennungseinheit untereinander verbindet, unabhängig von der Konfiguration der Kästen eine identische räumliche Position aufweisen/aufweist.

7. Serie von Wärmetauschern, die gemäß einem Verfahren nach einem der vorhergehenden Ansprüche hergestellt wird.

8. Wärmetauscher, der mindestens eine Austauschmatrix (12) beinhaltet, die einen Stapel von aufeinanderfolgenden Trennblechen (14) und Wellen (16) beinhaltet, die eine Vielzahl von Durchlässen (20) begrenzen, die dazu angepasst sind, das Strömen mindestens eines ersten Fluids (A), eines zweiten Fluids (B) und eines dritten Fluids durch die Matrix (12) zu ermöglichen, sodass das dritte Fluid das erste und das zweite Fluid erwärmen oder durch diese erwärmt werden kann, wobei jede Platte eine Länge und eine Breite aufweist, wobei der Stapel eine zu der Länge und der Breite der Bleche senkrechte Stapelrichtung (L) aufweist,
- wobei die Matrix eine vorgegebene Anzahl von Öffnungen (20) beinhaltet, die jeweils in einer Umfangsfläche (22) der Matrix (12) eingerichtet sind und die jeweils mit einem der assoziierten Durchlässe (20) kommunizieren,
- mindestens einen länglichen Hauptfluidverteilungskasten (24, 42), der mindestens einen Teil der Öffnungen (20) oder aber alle Öffnungen überdeckt und der mit einer Leitung (30, 40) verbunden ist, wobei die Achse des Hauptkastens zu der Stapelrichtung (L) parallel und zu der Breite und der Länge der Bleche senkrecht ist,
- mindestens einen sekundären länglichen Verteilungskasten (36), der einen Raum (38) bildet, der vollständig oder teilweise durch den Hauptverteilungskasten (24) abgedeckt ist, der in Abhängigkeit von seiner Größe eine begrenzte Anzahl von Öffnungen (20) überdeckt und mit einer Leitung (30) für das Durchlassen des assoziierten Fluids verbunden ist, wobei die Achse des sekundären Kastens zu der Stapelrichtung parallel und zu der Breite und der Länge der Bleche senkrecht ist.

9. Lufttrennungseinheit, die mindestens einen Wärmetauscher oder mindestens eine Serie von Wärmetauschern nach Anspruch 7 oder 8 beinhaltet.

## Claims

1. Method for producing a series of at least a first and a second heat exchanger (10), each exchanger (10) comprising:
- at least one heat exchange matrix unit (12) which comprises a successive stack of separator sheets (14) and of corrugated fins (16) delimiting a plurality of passages (20) suited to allowing at least a first fluid (A), a second fluid (B) and a third fluid to flow through the matrix unit (12), so that the third fluid can heat or be heated by the first and second fluids, each plate having a length and a width, the stack having a direction of stacking (L) perpendicular to the length and to the width of the sheets,
- the matrix unit comprising a predetermined number of openings (20) which are each formed in a peripheral face (22) of the matrix unit (12) and which each communicate with one of the said associated passages (20),
- at least one elongate fluid distribution tank (24, 42) which caps at least some of the openings (20), and which is connected to a pipe (30, 40), the axis of the tank being parallel to the direction of stacking and perpendicular to the width (T) and to the length (V) of the sheets,
- the matrix unit or units of the first exchanger being substantially identical to that/those of the second exchanger,
- the method consisting in adapting the exchangers of the series by installing several elongate fluid distribution tanks (42) on the matrix unit, each tank capping just some of the openings (20) assigned to the first fluid (A) and to the second fluid (B), each tank having its axis in the direction of stacking, **characterized in that** each of the distribution tanks is connected to a pipe (30, 40) so that the number of openings assigned to the first fluid differs from the number of openings assigned to the first fluid, and for preference, the number of openings assigned to the second fluid differs from the number of openings assigned to the second fluid for the at least first and second exchangers of the series.

2. Method according to Claim 1, **characterized in that** at least one secondary distribution tank (36), which forms a compartment (38) completely or partially covered by a main distribution tank (24), caps a number of openings (20) that is delimited according to its size and is connected to a pipe (30) for the passage of the associated fluid.

3. Method according to either one of the preceding claims, **characterized in that** the openings (20) are aligned and spaced uniformly on the said peripheral face (22) of the exchanger (10).

4. Method according to any one of the preceding claims, **characterized in that** a main distribution tank (24) covers all of the openings (20).

5. Method according to one of Claims 1 to 3, **characterized in that** one main distribution tank (42) covers just some of the openings (20), and at least one other distribution tank (42) covers another proportion, or even the rest, of the openings.

6. Method according to any one of the preceding claims, **characterized in that** the pipes (30) which are connected to the said compartments (28) and/or at least one manifold connecting various pipes of the various heat exchange bodies of a separation unit to one another, has/have a position in space that is identical regardless of the configuration of the tanks.

7. Series of heat exchangers produced according to a method according to one of the preceding claims.

8. Heat exchanger comprising at least one heat exchange matrix unit (12) which comprises a successive stack of separator sheets (14) and of corrugated fins (16) delimiting a plurality of passages (20) suited to allowing at least a first fluid (A), a second fluid (B) and a third fluid to flow through the matrix unit (12), so that the third fluid can heat or be heated by the first and second fluids, each plate having a length and a width, the stack having a direction of stacking (L) perpendicular to the length and to the width of the sheets,
- the matrix unit comprising a predetermined number of openings (20) which are each formed in a peripheral face (22) of the matrix unit (12) and which each communicate with one of the said associated passages (20),
- at least one elongate main fluid distribution tank (24, 42) which caps at least some of the openings (20), or even all of the openings, and which is connected to a pipe (30, 40), the axis of the main tank being parallel to the direction of stacking (L) and perpendicular to the width and to the length of the sheets,
- at least one elongate secondary distribution tank (36), which forms a compartment (38) completely or partially covered by the main distribution tank (24), which caps a number of openings (20) that is delimited according to its size and is connected to a pipe (30) for the passage of the associated fluid, the axis of the secondary tank being parallel to the direction of stacking and perpendicular to the width and to the length of the sheets.

9. Air separation unit comprising at least one heat exchanger or at least one series of heat exchangers according to Claim 7 or 8.
